(19) Europäisches Patentamt
European Patent Office
Office européen des brevets

(11) **EP 2 966 311 A1**

(12) **EUROPEAN PATENT APPLICATION**
published in accordance with Art. 153(4) EPC

(43) Date of publication:
**13.01.2016 Bulletin 2016/02**

(51) Int Cl.:
*F16C 33/64* (2006.01)     *C21D 1/06* (2006.01)
*C21D 9/36* (2006.01)     *C21D 9/40* (2006.01)
*C23C 8/32* (2006.01)     *F16C 19/06* (2006.01)
*F16C 33/32* (2006.01)     *F16C 33/62* (2006.01)

(21) Application number: 14749043.7

(22) Date of filing: **20.01.2014**

(86) International application number:
**PCT/JP2014/050962**

(87) International publication number:
**WO 2014/122970 (14.08.2014 Gazette 2014/33)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **08.02.2013   JP 2013023277**

(71) Applicant: **NTN Corporation
Osaka-shi, Osaka 550-0003 (JP)**

(72) Inventors:
• **SAKANAKA, Noriaki
Kuwana-shi
Mie 511-0867 (JP)**

• **MATSUBARA, Yukio
Kuwana-shi
Mie 511-0867 (JP)**
• **OHKI, Chikara
Kuwana-shi
Mie 511-0867 (JP)**
• **SATO, Daisuke
Kuwana-shi
Mie 511-0867 (JP)**

(74) Representative: **Bockhorni & Kollegen
Elsenheimerstraße 49
80687 München (DE)**

(54) **BEARING COMPONENT AND ROLLING BEARING**

(57)     A bearing component (an outer ring 11, an inner ring 12, and a ball 13) is made of bearing steel, and has a surface layer portion (11B, 12B, 13B) that is nitrided and includes an outer ring raceway surface (11A) and an inner ring raceway surface (12A) or a rolling surface (13A). A nitrogen concentration in the surface layer portion (11B, 12B, 13B) is 0.4 mass % or higher. An area ratio of a precipitate in an inner portion (11C, 12C, 13C) that is not nitrided is 11% or higher.

FIG.2

**Description**

TECHNICAL FIELD

The present invention relates to a bearing component and a rolling bearing, and more particularly to a bearing component having a surface layer portion that is nitrided and includes a raceway surface or a rolling surface, and a rolling bearing including the bearing component.

BACKGROUND ART

One of the important features of a rolling bearing is to reduce torque during rotational movement of a machine. In order to implement this feature, it is important to reduce energy loss during rotation. Energy loss during rotation of the rolling bearing is caused by: rolling viscous resistance; differential sliding; elastic hysteresis loss; resistance to stirring of lubricating oil, or the like. When comparing a ball bearing and a roller bearing in a rolling bearing, the ball bearing is less in energy loss than the roller bearing due to the difference of the rolling viscous resistance. Accordingly, it can be said that the ball bearing is a more preferable structure from a viewpoint of reducing torque during rotational movement of the machine. On the other hand, a lifetime is another important feature of a bearing. A method of performing an efficient carbonitriding treatment for increasing this lifetime has also been proposed (for example, see Japanese Patent Laying-Open No. 2007-154293 (PTD 1)).

Since the roller bearing is larger in contact area between bearing components (a bearing ring and a ball) than the ball bearing, the bearing components receives less contact surface pressure. Accordingly, the roller bearing is effective from a viewpoint of supporting large load. When large load is supported in the ball bearing, the contact surface pressure becomes excessive, so that plastic deformation occurs in a bearing ring and a ball. Thereby, the rotational movement of the machine is increased in torque, and further, abnormal noise occurs and rotational accuracy lowers, with the result that it becomes difficult to achieve the function as a bearing. The excessive load (contact surface pressure) that may cause a malfunction to occur in the bearing is referred to as "static load capacity" of the rolling bearing. Therefore, for achieving a rolling bearing with reduced torque, it is recognized as being preferable to employ a ball bearing made of a material that is less likely to plastically deform (having high yield strength).

A representative material that is less likely to plastically deform may be a ceramic material such as silicon nitride. However, this ceramic material is less likely to plastically deform but is difficult to be processed. Accordingly, in the case where this ceramic material is employed as a bearing material, there occurs a problem of increasing a processing cost. Therefore, it is required to develop, in place of a ceramic material, a material that is inexpensive in total cost including a processing cost and less likely to plastically deform. It is to be noted that "less likely to plastically deform" does not mean hardness represented by HV hardness or HRC hardness, but relates to a field in which a plastic deformation amount is minimal, which is close to an elastic limit, yield strength and the like.

CITATION LIST

PATENT DOCUMENT

PTD 1: Japanese Patent Laying-Open No. 2007-154293

SUMMARY OF INVENTION

TECHNICAL PROBLEM

As described above, for a ball bearing having a structure that is effective for reducing torque, it has been conventionally difficult to prevent plastic deformation without using a material such as silicon nitride that is expensive in a processing cost. In addition to reduction of torque, it is also necessary to increase the lifetime of the bearing.

Accordingly, an object of the present invention is to provide a bearing component that is inexpensive and improved in yield strength and increased in lifetime, and a rolling bearing including this bearing component.

SOLUTION TO PROBLEM

A bearing component according to one aspect of the present invention is made of bearing steel, and has a surface layer portion that is nitrided and includes a raceway surface or a rolling surface. In the above-described bearing component, a nitrogen concentration in the surface layer portion is 0.4 mass % or higher. Furthermore, in the above-described bearing component, an area ratio of a precipitate in an inner portion that is not nitrided is 11% or higher.

As to the bearing component used for a rolling bearing, the present inventors have made a close study about measures for improving the yield strength and also increasing the lifetime without having to use a material that is expensive in processing cost. As a result, the present inventors have achieved the following findings to thereby conceive of the present invention.

The bearing component is manufactured by being subjected to carbonitriding and quenching treatments and the like, and then, subjected to a tempering treatment. According to the study by the present inventors, when the heating temperature during the tempering treatment is set to be higher than that in the conventional case, the area ratio of the precipitate in the inner portion that is not nitrided by the carbonitriding treatment (which will be hereinafter referred to as an un-nitrided region) is increased to 11% or higher, with the result that the yield strength of the material is improved. In other words, in the case of the above-described bearing component in which the area ratio of the precipitate in the un-nitrided region is increased, plastic deformation of the material can be suppressed without having to use a material such as silicon nitride that is expensive in processing cost.

Furthermore, the bearing component can be increased in lifetime by increasing the nitrogen concentration in the surface layer portion by a carbonitriding treatment. According to the conventional bearing component, however, since the yield strength of the material decreases as the nitrogen concentration of the surface layer portion increases, it is difficult to achieve both of improved yield strength and increased lifetime. In contrast, according to the study by the present inventors, the conflicting relation between the yield strength and the lifetime is eliminated in the case where the tempering temperature is set to be higher than that in the conventional case. Specifically, when the tempering temperature is raised to set the area ratio of the precipitate in the un-nitrided region to be 11% or higher, not only the yield strength is simply improved, but also a decrease in yield strength can be suppressed also when the nitrogen concentration of the surface layer portion is increased to 0.4 mass % or higher. Therefore, by the bearing component according to one aspect of the present invention described above in which the nitrogen concentration in the surface layer portion is defined at 0.4 mass % or higher and the area ratio of the precipitate in the un-nitrided region is defined at 11% or higher, it becomes possible to implement a bearing component that is inexpensive and improved in yield strength and increased in lifetime.

In the above-described bearing component, the area ratio of the precipitate may be 12% or higher. In the case where the tempering temperature is further raised, the area ratio of the precipitate in the un-nitrided region is increased to 12% or higher. Thereby, the yield strength of the material can be further improved.

In the above-described bearing component, a remaining austenite amount in the surface layer portion may be 8 vol. % or lower.

In the case where the tempering temperature is set to be higher than that in the conventional case as described above, not only the area ratio of the precipitate in the un-nitrided region is increased, but also the remaining austenite amount in the surface layer portion is decreased to 8 vol. % or lower. In this case, a bearing component made of a material with improved yield strength can be similarly obtained.

In the above-described bearing component, the remaining austenite amount may be 5 vol. % or lower. In the case where the tempering temperature is set to be further higher as described above, not only the area ratio of the precipitate in the un-nitrided region is further increased, but also the remaining austenite amount in the surface layer portion is decreased to 5 vol. % or lower. In this case, the yield strength of the material can be similarly further improved.

The above-described bearing component may be made of SUJ2 of the JIS standard. The SUJ2 of the JIS standard that is representative bearing steel is suitable as a material forming the bearing component according to one aspect of the present invention described above.

A bearing component according to another aspect of the present invention is made of bearing steel, and has a surface layer portion that is nitrided and includes a raceway surface or a rolling surface. In the above-described bearing component, a nitrogen concentration in the surface layer portion is 0.4 mass % or higher. Furthermore, in the above-described bearing component, a remaining austenite amount in the surface layer portion is 8 vol. % or lower.

As described above, in the case where the tempering temperature is set to be higher than that in the conventional case, the remaining austenite amount in the surface layer portion is decreased to 8 vol. % or lower, with the result that the yield strength of the material is improved. Also, in the case where the tempering temperature is set to be higher than that in the conventional case, the conflicting relation between the yield strength and the lifetime of the material is eliminated. Thus, even in the case where the nitrogen concentration in the surface layer portion is increased to 0.4 mass % or higher, a decrease in yield strength can be suppressed. Therefore, by the bearing component according to another aspect of the present invention, it becomes possible to implement a bearing component that is inexpensive and improved in yield strength and increased in lifetime as in the case of the bearing component according to one aspect of the present invention described above.

In the above-described bearing component, the remaining austenite amount in the surface layer portion may be 5 vol. % or lower.

In the case where the tempering temperature is set to be further higher as described above, the remaining austenite amount in the surface layer portion is decreased to 5 vol. % or lower. Thereby, the yield strength of the material can be further improved.

The above-described bearing component may be made of SUJ2 of the JIS standard. The SUJ2 of the JIS standard that is representative bearing steel is also suitable as a material forming the bearing component according to another aspect of the present invention described above.

In the above-described bearing component, a grain size number of a prior austenite crystal grain in an inner portion that is not nitrided may be No. 9 or higher and No. 11 or lower.

The size of the prior austenite crystal grain depends on the heating temperature and the like during the carbonitriding treatment. Accordingly, if the size of the prior austenite crystal grain in the above-described bearing component falls within the above-described range, it can be confirmed that the carbonitriding treatment is performed at an appropriate temperature.

In the above-described bearing component, the surface layer portion may be nitrided by a carbonitriding treatment. Also, the carbonitriding treatment may be performed such that, assuming that a carbon activity in the bearing component is defined as $a_C$ and an undecomposed ammonia concentration within a heat treatment furnace having the bearing component arranged therein during the carbonitriding treatment is defined as $C_N$, a value of $\gamma$ defined by $\gamma = a_C/C_N$ falls within a range of 2 or more and 5 or less.

In bearing steel (steel having a carbon concentration of 0.8 mass % or higher), the rate of intrusion of nitrogen into the bearing component is maximized when the value of $\gamma$ is 5, and the rate of intrusion of nitrogen becomes constant when the value of $\gamma$ is 5 or less. In other words, by setting the value of $\gamma$ at 5 or lower, it becomes possible to maximize the rate of intrusion of nitrogen into the bearing component made of bearing steel. In addition, $a_C$ is a value calculated by the following equation (1), in which $P_{CO}$ is partial pressure of carbon monoxide (CO); $P_{CO2}$ is partial pressure of carbon dioxide ($CO_2$); and K is an equilibrium constant in $<C> + CO_2 <=> 2CO$.

[Equation 1]

$$ a_c = \frac{(Pco)^2}{K \times (Pco_2)} \qquad \cdots(1) $$

On the other hand, in the case where the value of $\gamma$ is less than 2, the supply rate of ammonia into the heat treatment furnace increases, and accordingly, the partial pressure of carbon monoxide within the heat treatment furnace lowers. Therefore, it becomes necessary to increase the amount of enrich gas introduced into the heat treatment furnace in order to maintain the carbon potential, with the result that sooting (which means that soot is produced within the heat treatment furnace and adheres to the bearing component) is more likely to occur. Thus, quality defects such as surface carburizing may occur in the bearing component. For the reasons as described above, it is preferable that the value of $\gamma$ is 2 or more and 5 or less.

A rolling bearing according to the present invention includes: an outer ring having an inner circumferential surface provided with a raceway surface; an inner ring having an outer circumferential surface provided with a raceway surface, the inner ring being disposed on an inner side of the outer ring; and a plurality of rolling elements each having a rolling surface coming in contact with the raceway surface and aligned on an annular raceway. In the above-described rolling bearing, at least one of the outer ring, the inner ring and the rolling elements is a bearing component according to the above-described present invention.

The rolling bearing according to the present invention includes a bearing component that is inexpensive and improved in yield strength and increased in lifetime. Accordingly, plastic deformation caused by applying excessive contact surface pressure onto the bearing component is suppressed, so that it becomes possible to reduce torque during rotational movement of a machine. Therefore, according to the rolling bearing of the present invention, it becomes possible to implement a rolling bearing that is inexpensive and can be reduced in torque during the rotational movement of a machine and increased in lifetime.

ADVANTAGEOUS EFFECTS OF INVENTION

As apparent from the above description, according to the bearing component of the present invention, it becomes possible to provide a bearing component that is inexpensive and improved in yield strength and increased in lifetime. Also, according to the rolling bearing of the present invention, it becomes possible to provide a rolling bearing that is inexpensive and can be reduced in torque during the rotational movement of a machine and increased in lifetime.

BRIEF DESCRIPTION OF DRAWINGS

Fig. 1 is a schematic cross-sectional view showing the structure of a rolling bearing.

Fig. 2 is a schematic cross-sectional view showing the enlarged structure of the rolling bearing.

Fig. 3 is a flowchart schematically showing methods of manufacturing a rolling bearing and a bearing component.

Fig. 4 is a diagram for illustrating details of a quench hardening step included in the method of manufacturing a bearing component.

Fig. 5 is a diagram showing one example of a heating pattern in a heating pattern control step included in a carbonitriding step in Fig. 4.

Fig. 6 is a diagram showing the relation between the nitrogen concentration and the tempering temperature, and the residual indentation depth.

Fig. 7 is a diagram showing a Weibull plot of a dent-originated peeling life.

Fig. 8 is a diagram showing a rapid acceleration and deceleration pattern in a hydrogen resistance lifetime test.

Fig. 9 is a diagram showing a Weibull plot of the hydrogen resistance lifetime.

Fig. 10 is a diagram showing the relation between the tempering temperature and the remaining austenite amount.

Fig. 11 is a diagram showing the relation between the tempering temperature and the area ratio of a precipitate.

Fig. 12 is a photograph of a precipitate in the case where the tempering temperature is 180 °C.

Fig. 13 is a photograph of a precipitate in the case where the tempering temperature is 210 °C.

Fig. 14 is a photograph of a precipitate in the case where the tempering temperature is 240 °C.

Fig. 15 is a photograph of a precipitate in the case where the tempering temperature is 260 °C.

Fig. 16 is a photograph of a prior austenite crystal grain in an un-nitrided region.

DESCRIPTION OF EMBODIMENTS

The embodiments of the present invention will be hereinafter described with reference to the accompanying drawings, in which the same or corresponding components are designated by the same reference characters, and description thereof will not be repeated.

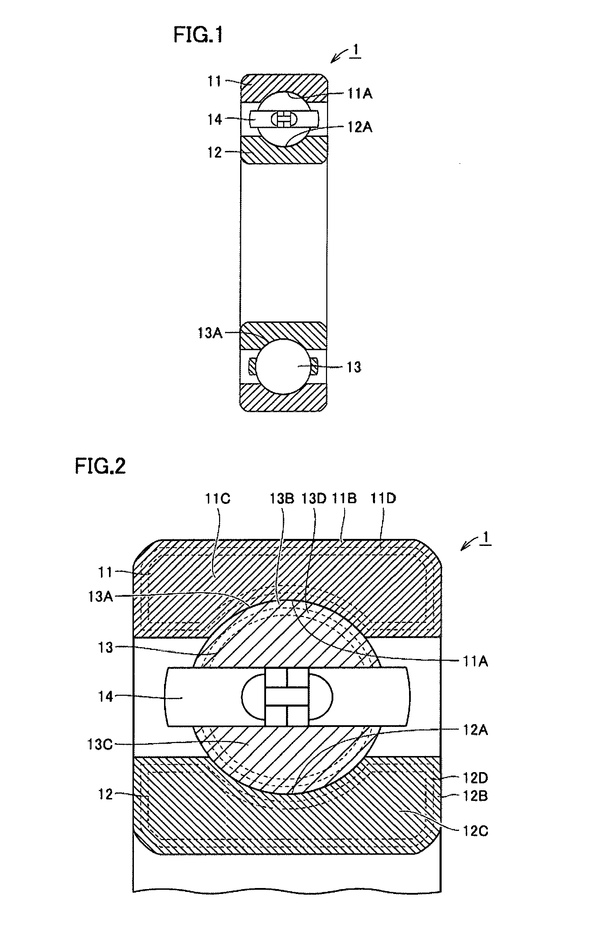

First, the structure of a deep groove ball bearing that is a rolling bearing according to one embodiment of the present invention will be hereinafter described. Referring to Fig. 1, a deep groove ball bearing 1 according to the present embodiment includes an annular outer ring 11, an annular inner ring 12, and a plurality of balls 13 arranged between outer ring 11 and inner ring 12 and serving as rolling elements held in a circular holder 14. Outer ring 11 has an outer ring raceway surface 11A on its inner circumferential surface. Inner ring 12 has an inner ring raceway surface 12A on its outer circumferential surface, and is arranged on the inner side of outer ring 11 such that inner ring raceway surface 12A faces outer ring raceway surface 11A. The plurality of balls 13 each have a rolling surface 13A that is in contact with outer ring raceway surface 11A and inner ring raceway surface 12A. The plurality of balls 13 are arranged on the circular raceway of each of outer ring 11 and inner ring 12 by holder 14, and aligned at a prescribed pitch in the circumferential direction. Thereby, the plurality of balls 13 are held so as to freely roll on the raceway. By such a configuration, outer ring 11 and inner ring 12 of deep groove ball bearing 1 are rotatable relative to each other. In addition, outer ring 11, inner ring 12, and balls 13 each serve as a bearing component according to the present embodiment described later.

Then, the bearing component (outer ring 11, inner ring 12, and balls 13) according to the present embodiment will be hereinafter described in detail. The above-described bearing component is made of bearing steel such as SUJ2 of the JIS standard. Referring to Fig. 2, in a region including a surface (outer ring raceway surface 11A, inner ring raceway surface 12A, and rolling surface 13 A) of the above-described bearing component, each of nitrogen-enriched layers 11D, 12D and 13D that are higher in nitrogen concentration than inner portions 11C, 12C and 13C, respectively, is formed. Surface layer portions 11B, 12B and 13B respectively including outer ring raceway surface 11A, inner ring raceway surface 12A and rolling surface 13 A corresponding to the surfaces of nitrogen-enriched layers 11D, 12D and 13D are nitrided by the carbonitriding treatment, in which case the nitrogen concentration is 0.4 mass % or higher. Thereby, the above-described bearing component (outer ring 11, inner ring 12 and balls 13) is increased in lifetime. In addition, surface layer portions 11B, 12B and 13B represent regions that are located at a distance of 20 $\mu$m or less from outer ring raceway surface 11A, inner ring raceway surface 12A and rolling surface 13A, respectively.

The remaining austenite amount in each of surface layer portions 11B, 12B and 13B of the above-described bearing components is 8 vol. % or lower, and preferably, 5 vol. % or lower. Furthermore, in the above-described bearing component, the area ratio of the precipitate in each of un-nitrided inner portions 11C, 12C and 13C is 11% or higher, and preferably, 12% or higher. Thereby, the yield strength of the material of the above-described bearing component is improved as described later. Furthermore the "precipitate" is carbide of iron or carbonitride obtained by replacing a part of carbon of the carbide with nitrogen, and includes an Fe-C based compound and an Fe-C-N based compound. Furthermore, this carbonitride may contain an alloy component such as chromium included in steel.

In the above-described bearing component, the size of the prior austenite crystal grain in each of inner portions 11C, 12C and 13C is No. 9 or higher and No. 11 or lower of the JIS standard. The size of the prior austenite crystal grain depends on the heating temperature and the like during the carbonitriding treatment. Accordingly, if the size of the prior austenite crystal grain in the above-described bearing component falls within the above-described range, it can be confirmed that the carbonitriding treatment is performed at an appropriate temperature (850 °C).

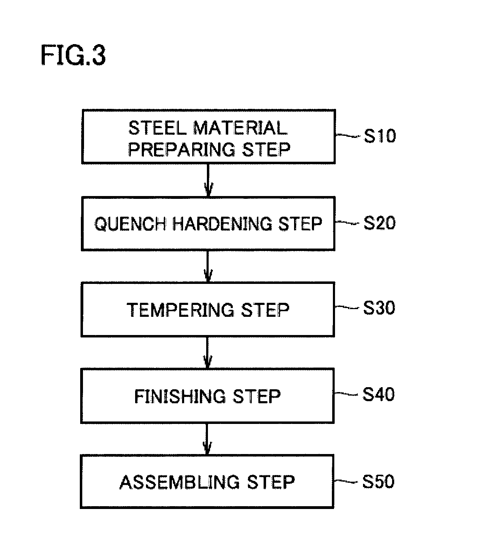

Then, the methods of manufacturing a rolling bearing and a bearing component according to the present embodiment will be hereinafter described. Referring to Fig. 3, in the method of manufacturing a rolling bearing according to the present embodiment, deep groove ball bearing 1 according to the above-described present embodiment is manufactured by sequentially performing steps (S10) to (S50). Furthermore, in the method of manufacturing a rolling bearing according to the present embodiment, steps (S10) to (S40) are performed as a method of manufacturing a bearing component according to the present embodiment.

Referring to Fig. 3, a steel material preparing step is first performed as a step (S10). In this step (S10), a steel material made of hypereutectoid steel such as SUJ2 of the JIS standard is first prepared. Then, the steel material is molded in an approximate shape of the bearing component. For example, bar steel, a steel wire and the like are used as a material and subjected to processing such as cutting, forging and turning, so that steel materials formed in approximate shapes of outer ring 11, inner ring 12, balls 13 and the like each as a bearing component are prepared (see Fig. 1).

Then, a quench hardening step is performed as a step (S20). In this step (S20), the steel material prepared in the above-described step (S10) is subjected to a carbonitriding treatment, and then, cooled from the temperature equal to or higher than an $A_1$ transformation point (hereinafter simply referred to as an $A_1$ point) to the temperature equal to or lower than a $M_S$ point (martensitic transformation starting point). The carbonitriding treatment is performed such that, assuming that the carbon activity in the bearing component is defined as $a_C$ and the undecomposed ammonia concentration within a heat treatment furnace having a bearing component arranged therein in the carbonitriding treatment is defined as $C_N$, the value of $\gamma$ defined by $\gamma = a_C/C_N$ falls within a range of 2 or more and 5 or less, and preferably, is equal to 5. Thereby, the surface layer portion of the bearing component is nitrided. The details of this step (S20) will be described later.

Then, a tempering step is performed as a step (S30). In this step (S30), the steel material having been quench-hardened in the above-described step (S20) is subjected to a heat treatment at a temperature equal to or lower than the $A_1$ point. More specifically, after the carbonitriding treatment, the steel material is held for a prescribed time period (for example, 2 hours) at a temperature of 240°C or higher corresponding to the temperature equal to or lower than the $A_1$ point, and preferably, at a temperature of 240°C or higher and 260 °C or lower. Thereby, the steel material is subjected to a tempering treatment. Then, the steel material is subsequently cooled by air at a room temperature (air cooling). Consequently, the steel material can be improved in toughness and the like.

Then, finishing processing is performed as a step (S40). In this step (S40), outer ring raceway surface 11A, inner ring raceway surface 12A and rolling surface 13A of the steel material subjected to a tempering treatment are subjected to grinding and finishing processing. Thereby, outer ring 11, inner ring 12 and balls 13 each as a bearing component according to the above-described present embodiment are manufactured (see Fig. 1).

Then, an assembling step is performed as a step (S50). In this step (S50), outer ring 11, inner ring 12 and balls 13 that have been manufactured in the above-described steps (S10) to (S40) and holder 14 and the like that are separately prepared are assembled to thereby fabricate deep groove ball bearing 1 in the above-described embodiment (see Fig. 1).

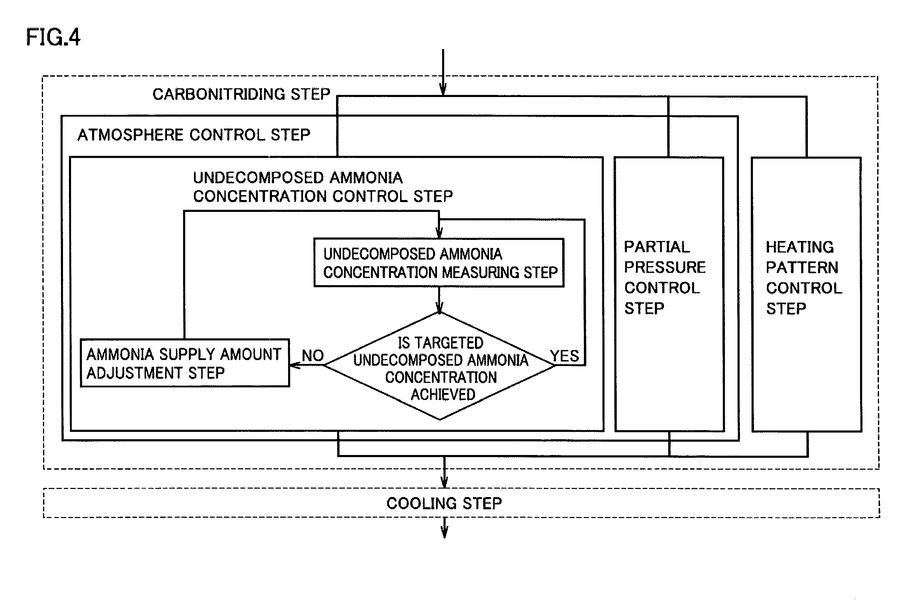

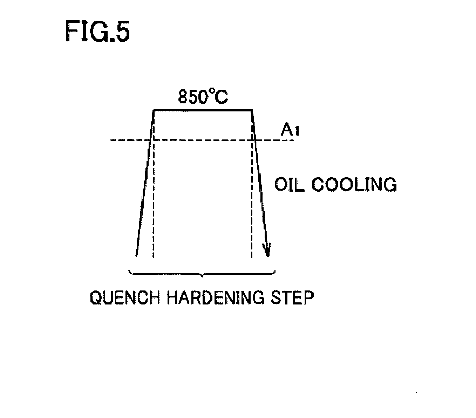

Then, the details of the quench hardening step (S20) will be hereinafter described. Fig. 4 is a diagram for illustrating details of the quench hardening step included in the method of manufacturing a bearing component according to the present embodiment. Furthermore, Fig. 5 is a diagram showing an example of a heating pattern in a heating pattern control step included in a carbonitriding step in Fig. 4. In Fig. 5, the horizontal direction indicates time and illustrates that the time elapses toward the right side in the figure. Also in Fig. 5, the vertical direction indicates a temperature and illustrates that the temperature is higher in the upward direction. Referring to Figs. 4 and 5, details of the quench hardening step included in the method of manufacturing a bearing component according to the present embodiment will be hereinafter described.

Referring to Fig. 4, in the quench hardening step of the method of manufacturing a bearing component according to the present embodiment, a carbonitriding step is first performed, in which a steel material as a workpiece is carbonitrided. Then, a cooling step is performed, in which the steel material is cooled from the temperature equal to or higher than the $A_1$ point to the temperature equal to or lower than the $M_S$ point.

The carbonitriding step includes: an atmosphere control step in which the atmosphere within the heat treatment furnace is controlled; and a heating pattern control step in which the temperature history applied to the workpiece within the heat treatment furnace is controlled. This atmosphere control step and the heating pattern control step can be performed independently and also concurrently. Also, the atmosphere control step includes: an undecomposed ammonia concentration control step of controlling the undecomposed ammonia concentration within the heat treatment furnace; and a partial pressure control step of controlling partial pressure of at least one of carbon monoxide and carbon dioxide within the heat treatment furnace.

In the partial pressure control step, the partial pressure of at least one of carbon monoxide and carbon dioxide within the heat treatment furnace is controlled, thereby controlling a carbon activity ($a_C$) value in the steel material, so

that a $\gamma$ value is adjusted and also a carbon potential ($C_P$) value is adjusted. Furthermore, in the atmosphere control step, the undecomposed ammonia concentration control step and the partial pressure control step are performed such that the value of $\gamma$ falls within a range of 2 or more and 5 or less, and preferably, is equal to 5.

Specifically, in the undecomposed ammonia concentration control step, the undecomposed ammonia concentration measuring step of measuring the undecomposed ammonia concentration ($C_N$) within the heat treatment furnace is first performed. The undecomposed ammonia concentration can be measured, for example, using a gas chromatograph. Then, an undecomposed ammonia concentration determination step is performed for determining whether it is necessary or not to perform an ammonia supply amount adjustment step of increasing or decreasing the amount of ammonia gas supplied to the heat treatment furnace based on the undecomposed ammonia concentration measured in the undecomposed ammonia concentration measuring step. This determination is made by comparing the measured undecomposed ammonia concentration and the targeted undecomposed ammonia concentration that is determined in advance so as to set the value of $\gamma$ ($a_C/C_N$) to fall within a range of 2 or more and 5 or less.

In the case where the undecomposed ammonia concentration does not reach the targeted undecomposed ammonia concentration, the ammonia supply amount adjustment step for increasing or decreasing the undecomposed ammonia concentration within the heat treatment furnace is performed, and then, the undecomposed ammonia concentration measuring step is performed again. The ammonia supply amount adjustment step can be performed, for example, by adjusting the amount of ammonia (the flow rate of ammonia gas) that flows from an ammonia gas cylinder coupled through a pipe line to the heat treatment furnace into the heat treatment furnace per unit time, by using a flow rate control apparatus including a mass-flow controller and the like attached to the pipe line. In other words, the ammonia supply amount adjustment step can be performed by: lowering the above-described flow rate when the measured undecomposed ammonia concentration is higher than the targeted undecomposed ammonia concentration; and increasing the above-described flow rate when the measured undecomposed ammonia concentration is lower than the targeted undecomposed ammonia concentration. In this ammonia supply amount adjustment step, in the case where there is a prescribed difference between the measured undecomposed ammonia concentration and the targeted undecomposed ammonia concentration, it can be determined how much the flow rate is increased or decreased, based on the relation between the increase/decrease in the flow rate of ammonia gas experimentally determined in advance and the increase/decrease in the undecomposed ammonia concentration.

On the other hand, in the case where the undecomposed ammonia concentration reaches the targeted undecomposed ammonia concentration, the undecomposed ammonia concentration measuring step is performed again without performing the ammonia supply amount adjustment step.

In the partial pressure control step, the supply amounts of propane ($C_3H_8$) gas, commercial butane ($C_4H_{10}$) and the like each as enrich gas are adjusted, thereby controlling the partial pressure of at least one of CO and $CO_2$, so that the $a_C$ value is adjusted. Specifically, partial pressure $P_{CO}$ of carbon monoxide and partial pressure $P_{CO2}$ of carbon dioxide in the atmosphere are measured, for example, using an infrared gas concentration measurement apparatus. Then, based on this measured value, the supply amounts of propane ($C_3H_8$) gas, commercial butane ($C_4H_{10}$) and the like each as enrich gas are adjusted such that the $a_C$ value reaches a target value.

The value of $\gamma$ may be controlled by changing the $a_C$ value by the partial pressure control step in the state where the undecomposed ammonia concentration is kept constant by the undecomposed ammonia concentration control step, or in contrast, may be controlled by changing the undecomposed ammonia concentration by the undecomposed ammonia concentration control step in the state where the $a_C$ value is kept constant by the partial pressure control step. Also, the value of $\gamma$ may be controlled by changing the undecomposed ammonia concentration and the $a_C$ value by the undecomposed ammonia concentration control step and the partial pressure control step.

In the heating pattern control step, the heating history applied to the steel material as a workpiece is controlled. Specifically, as shown in Fig. 5, in the atmosphere controlled by the atmosphere control step and the partial pressure control step described above, the steel material is heated to a temperature of 800°C or higher and 1000 °C or lower that is equal to or higher than the $A_1$ point, for example, heated to 850 °C, and then, held for 60 minutes or longer and 300 minutes or shorter, for example, for 150 minutes. As this holding time period elapses, the heating pattern control step ends, and at the same time, the atmosphere control step also ends.

Then, the steel member is immersed in oil (oil cooled), so that the cooling step is performed for cooling the steel member from the temperature equal to or higher than the $A_1$ point to the temperature equal to or lower than the $M_S$ point. By the above-described steps, the surface layer portion of the steel material is carbonitrided and also quench-hardened. Thereby, the quench hardening step (S20) of the present embodiment is completed.

In this way, in the method of manufacturing a bearing component according to the present embodiment, the carbonitriding treatment is performed so as to set the nitrogen concentration in the surface layer portion at 0.4 mass % or higher in the quench hardening step (S20), and the tempering treatment is performed at a temperature of 240 °C or higher and 260 °C or lower in the tempering step (S30). As a result, outer ring 11, inner ring 12 and balls 13 can be manufactured (see Figs. 1 and 2), in which the remaining austenite amount in each of surface layer portions 11B, 12B and 13B is 8 vol. % or lower; the area ratio of the precipitate in each of un-nitrided inner portions 11C, 12C and 13C is 11% or higher; and the yield strength is improved and the lifetime is increased.

Examples

The following experiments were carried out for the purpose of obtaining an inexpensive bearing component improved in yield strength and increased in lifetime. First, a steel material made of SUJ2 of the JIS standard was prepared, and sequentially subjected to carbonitriding, quenching, and tempering treatments, and then, subjected to grinding and finishing processing, thereby manufacturing a bearing component. Then, the following tests were performed for the surface layer portions having various nitrogen concentrations and various tempering temperatures.

As to the atmosphere during the carbonitriding treatment, the value of $\gamma$ was set at 4.75 and the heating temperature was set at 850 °C. In the case where the value of $\gamma$ is greater than 5, the rate of intrusion of nitrogen is lowered, so that a portion having a relatively high nitrogen concentration is more likely to accumulate in the surface layer. Thus, in consideration of the cutting stock in the grinding processing, the time period of the carbonitriding treatment becomes extremely long, which is not practical. Furthermore, in the case where an SUJ2 material is used, a large amount of ammonia is required for keeping the undecomposed ammonia fraction at a high level at the temperature significantly higher than 850 °C, which leads to an increase in processing cost. On the other hand, the rate of nitrogen diffusing into steel is lowered at the temperature significantly lower than 850 °C, thereby lengthening the processing time. Accordingly, it can be said that the temperature around 850 °C is appropriate in the carbonitriding treatment for the SUJ2 material.

(1) Relation between Nitrogen Concentration and Tempering Temperature in Surface Layer Portion, and Residual Indentation Depth

First, the influence of the nitrogen concentration and the tempering temperature in the surface portion upon the residual indentation depth was examined. First, flat-plane test pieces having various nitrogen concentrations and tempering temperatures in each surface layer portion were fabricated. Specifically, test pieces having nitrogen concentrations of 0 mass %, 0.1 mass %, 0.25 mass %, and 0.4 mass % were prepared, and then subjected to a tempering treatment at temperatures of 180 °C, 210 °C, 240 °C, and 260 °C, respectively. Then, a ceramic ball (size: 3/8 inch) was pressed against the flat plane of each of these test pieces under the load with 4.5 GPa of the maximum contact surface pressure (assuming that a perfectly elastic body was employed), and each residual indentation depth obtained after eliminating the load was examined. In addition, the value of 4.5 GPa is almost the same as the maximum value of the maximum contact surface pressure applied to the rolling bearing in a market.

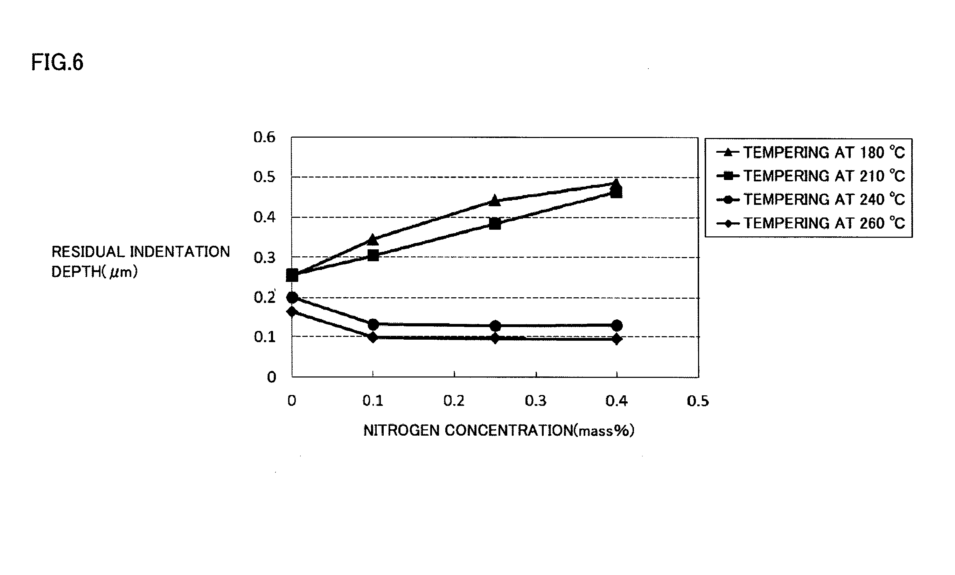

Fig. 6 shows the results obtained by examining the relation between the nitrogen concentration and the tempering temperature in the surface layer portion, and the residual indentation depth. In Fig. 6, the horizontal axis shows a nitrogen concentration (mass %) while the vertical axis shows a residual indentation depth ($\mu$m). As apparent from Fig. 6, in the cases where the tempering temperatures were 240 °C and 260 °C, the residual indentation depth greatly decreased as compared with the cases where the tempering temperatures were 180 °C and 210 °C. Furthermore, in the cases where the tempering temperatures were 180 °C and 210 °C, the residual indentation depth increased as the nitrogen concentration increased. In contrast, in the cases where the tempering temperatures were 240 °C and 260 °C, the residual indentation depth decreased on the contrary as the nitrogen concentration increased (plastic deformation was less likely to occur). It turned out from this result that, in the range of the above-described experiments (at the tempering temperature of 180 °C or higher and 260 °C or lower), the SUJ2 material containing nitrogen was achieved, in which the yield strength was increased as the tempering temperature was raised, thereby achieving high static load capacity.

(2) Relation between Nitrogen Concentration in Surface Layer Portion and Dent-Originated Peeling Life

Then, the relation between the nitrogen concentration in the surface layer portion and the dent-originated peeling life at the time of performing high-temperature tempering (240 °C, 260 °C) was examined. First, a test piece processed into the shape of the inner ring of the ball bearing (bearing model number: 6206) was fabricated. Then, artificial indentations equally divided at 6° was formed in the raceway surface groove bottom portion of this test piece, and then, the rolling fatigue test was performed. The artificial indentation was formed by applying a load of 196N with a Rockwell indenter. In the rolling fatigue test, the maximum contact surface pressure was set at 3.2 GPa, the inner ring revolution speed was set at 3000 rpm, and turbine oil VG56 was circulated for supply as lubricating oil.

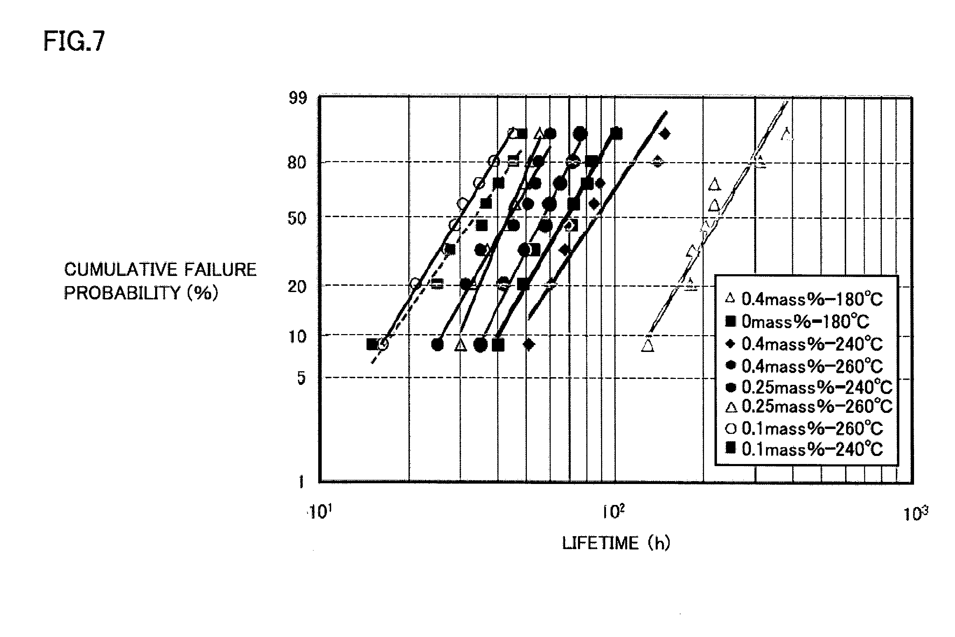

Fig. 7 shows the results obtained by examining the relation between the nitrogen concentration in the surface layer portion and the dent-originated peeling life. Fig. 7 shows a Weibull plot of the dent-originated peeling life, in which the horizontal axis shows a lifetime (h) while the vertical axis shows cumulative failure probability (%). Also in Fig. 7, the nitrogen concentration and the tempering temperature are shown by an indication of "nitrogen concentration-tempering temperature". For example, the indication of "0.4 mass %-240 °C" shows that the nitrogen concentration is 0.4 mass % and the tempering temperature is 240 °C. For reference, the figure also shows the result obtained in the case where the nitrogen concentration is 4 mass % and the tempering temperature is 180 °C. As apparent from Fig. 7, in the case where the nitrogen concentration was 0.4 mass % and the tempering temperature was 240 °C, the obtained results were almost the same as those in the case where the nitrogen concentration was 0 mass % and the tempering temperature was 180 °C. However, the dent-originated peeling life was decreased as the nitrogen concentration was lowered. Therefore, it turned out that, in order to achieve both of improved yield strength and increased lifetime, it is necessary to set the tempering temperature at an elevated temperature (240 °C, 260 °C) and to increase the nitrogen concentration in the surface layer portion to 0.4 mass % or higher, as described above.

(3) Relation between Nitrogen Concentration and Tempering Temperature in Surface Layer Portion, and Hydrogen Embrittlement Peeling Life

Then, the influence of the nitrogen concentration and the tempering temperature in the surface layer portion upon the hydrogen resistance in the rolling fatigue was examined. In this case, it is considered that the hydrogen source in the rolling fatigue is a lubricant itself or water mixed into the lubricant, which is decomposed due to sliding or the like caused between the elements coming in contact with each other, to thereby generate hydrogen, and part of this hydrogen intrudes into steel.

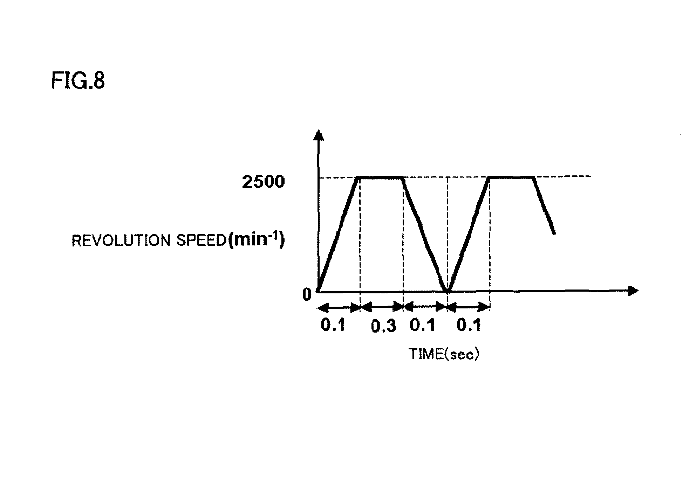

The rolling fatigue test was conducted using a bearing ring of a thrust bearing (bearing model number: 51106) as a test piece. The rapid acceleration and deceleration pattern shown in Fig. 8 was used as an operating pattern. In Fig. 8, the horizontal axis shows time (sec) while the vertical axis shows revolution speed ($min^{-1}$). Furthermore, as shown in Fig. 8, the revolution speed is accelerated to 2500 $min^{-1}$ for 0 sec to 0.1 sec, then, maintained for 0.3 sec, and then, decelerated to 0 $min^{-1}$ for 0.1 sec. The test was conducted by repeating this cycle. A ball made of SUS 440C was used and the number thereof was reduced from 17 (standard number) to 12. A holder made of resin and allowing equal division into 12 was fabricated, and the maximum contact surface pressure was set at 2.3 GPa. Water-soluble polyglycol oil was used as lubricating oil, into which pure water as a hydrogen source was mixed (pure water concentration: 40 mass %). A test machine was configured to automatically stop at the time when delamination occurred in the bearing ring and vibration became large.

In this case, it is confirmed in advance that the influence of pure water serving as a hydrogen source upon a lifetime (hydrogen resistance lifetime) does not change at a pure water concentration of 20 mass % or higher. After the test, the ratio of pure water in the lubricating oil slightly decreases. Accordingly, the validity of the above-described experiment as an evaluation of hydrogen resistance is ensured by measuring the mixing ratio of pure water after the test to thereby confirm that the concentration is 20 mass % or higher. In addition, pure water of about 35 mass % remained after the above-described experiment.

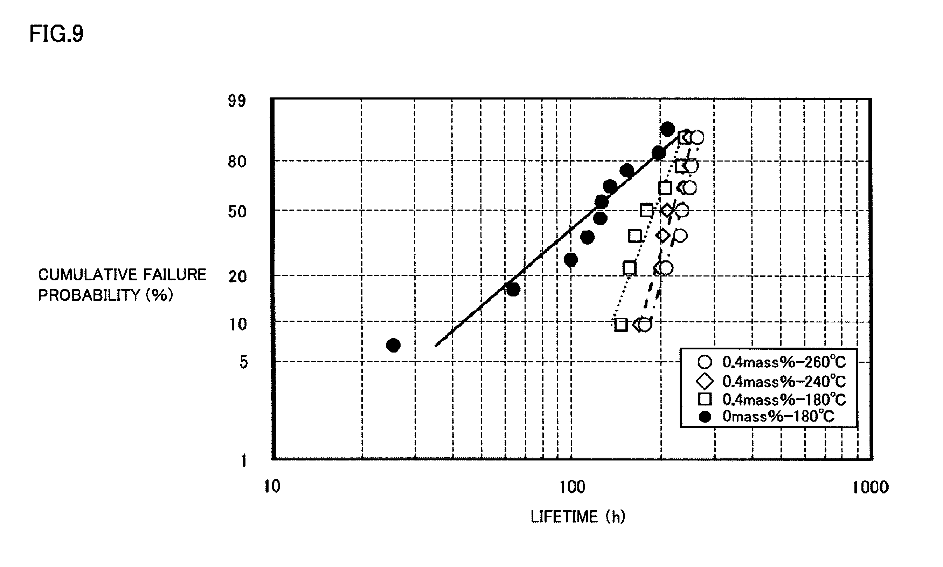

Fig. 9 and Table 1 each show the results obtained by examining the relation between the surface nitrogen concentration and the tempering temperature, and the hydrogen embrittlement peeling life. Fig. 9 shows a Weibull plot of the hydrogen resistance lifetime, in which the horizontal axis shows a lifetime (h) while the vertical axis shows cumulative failure probability (%). Also in Fig. 9, the nitrogen concentration and the tempering temperature are shown by an indication of "nitrogen concentration-tempering temperature" as in the case of Fig. 7. Table 1 shows values of $L_{10}$ lifetime (h), $L_{50}$ lifetime (h) and a Weibull slope for each heat treatment condition (nitrogen concentration-tempering temperature).

[Table 1]

| Heat Treatment Conditions | $L_{10}$ Lifetime (h) | $L_{50}$ Lifetime (h) | Weibull Slope |
|---|---|---|---|
| 0.4 mass%-260°C | 185 | 235 | 7.86 |
| 0.4 mass%-240°C | 173 | 220 | 7.73 |
| 0.4 mass%-180°C | 138 | 192 | 5.74 |
| 0 mass%-180°C | 44 | 120 | 1.89 |

As apparent from Fig. 9 and Table 1, $L_{10}$ lifetime was 44 h in the case of 0 mass %-180 °C, whereas $L_{10}$ lifetime was: 138 h (3.1 times) in the case of 0.4 mass %-180 °C; 173 h (3.9 times) in the case of 0.4 mass %-240 °C; and 185 h (4.2 times) in the case of 0.4 mass %-260 °C. Thus, the lifetime was increased as the tempering temperature was raised. It is considered this is because plastic deformation is less likely to occur as the tempering temperature rises, as having been described using the results shown in Fig. 6. The effects of hydrogen caused on plastic deformation are known as facilitating motion of dislocations, stabilizing and increasing atomic vacancy produced by the interaction between dislocations, and the like. Therefore, it is considered that the lifetime is lengthened to such an extent that plastic deformation is less likely to occur.

In addition, the longest lifetime was: 212 h in the case of 0 mass %-180 °C; 242 h in the case of 0.4 mass %-180 °C; 251 h in the case of 0.4 mass %-240 °C; and 266 h in the case of 0.4 mass %-260 °C. Accordingly, there was no significant difference among the longest lifetimes. On the other hand, the lifetimes varied widely in the case of 0 mass %-180 °C, and consequently, $L_{10}$ lifetime was shortened, whereas it is considered that the lifetimes were stably increased in each of the cases of 0.4 mass %-180 °C, 0.4 mass %-240 °C and 0.4 mass %-260 °C.

(4) Relation between Tempering Temperature and Remaining Austenite ($\gamma$) Amount

Then, the relation between the tempering temperature and the remaining austenite amount was examined. As described above, the static load capacity and the lifetime of the bearing vary depending on the tempering temperature, but it is difficult to directly obtain the conditions of the tempering temperature based on the bearing in a product state. In the case where the tempering temperature is constant, however, there exists a correlation between the remaining austenite amount and the tempering temperature at the position where the nitrogen concentration is 0.4 mass %. Accordingly, the tempering temperature can be clarified indirectly from this remaining austenite amount.

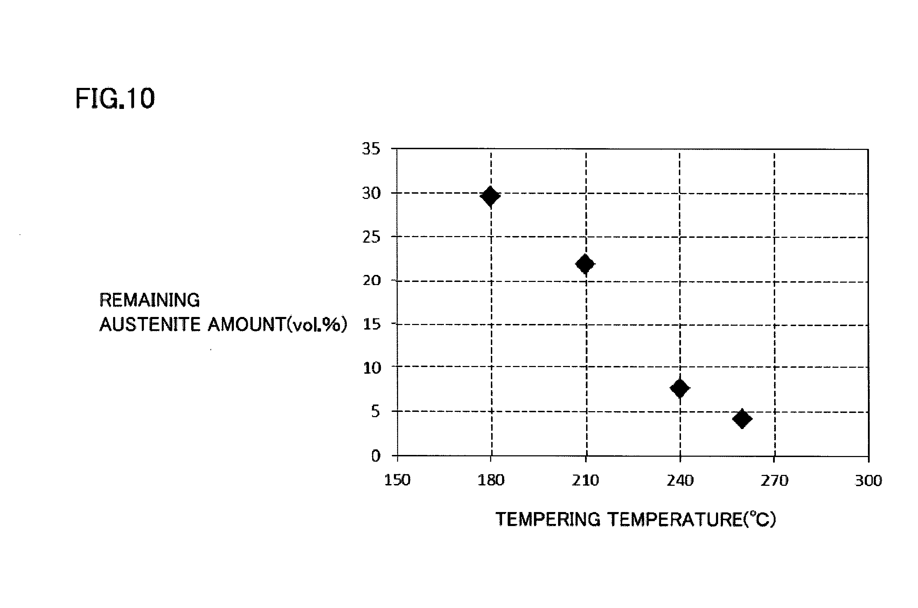

Fig. 10 shows the relation between the tempering temperature and the remaining austenite amount. In Fig. 10, the horizontal axis shows a tempering temperature (°C) while the vertical axis shows the remaining austenite amount (vol. %) at the position where the nitrogen concentration is 0.4 mass %. Furthermore, the holding time period of the tempering treatment is fixed to be 2 h. As shown in Fig. 10, it turned out that the remaining austenite amount is 8 vol. % or lower at a tempering temperature of 240 °C, and is decreased to 5 vol. % or lower at a tempering temperature of 260 °C.

(5) Relation between Area Ratio of Precipitate in Inner Portion and Tempering Temperature

Then, the relation between the area ratio of a precipitate in the inner portion and the tempering temperature was examined. A method of indirectly clarifying the tempering temperature based on the product state is to measure the area ratio of the precipitate in addition to the remaining austenite amount. This is because, in the case where the heating temperature during the quenching treatment (850 °C in this case, and a prior austenite crystal grain having Nos. 9 to 11 of the JIS standard is used) is constant and the holding time period during the tempering treatment is constant, the dissolved carbon precipitates in the base material as the tempering temperature rises, thereby forming a large cementite ($Fe_3C$).

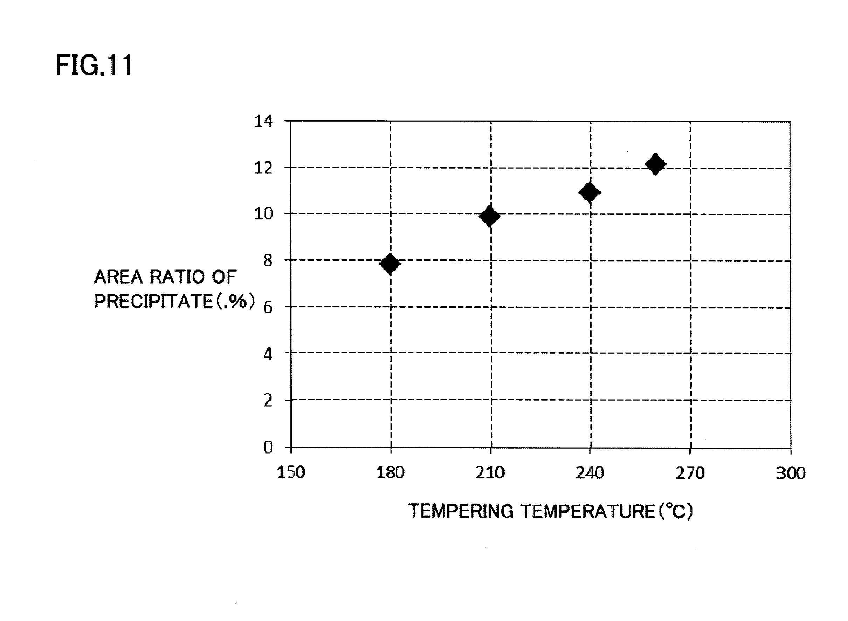

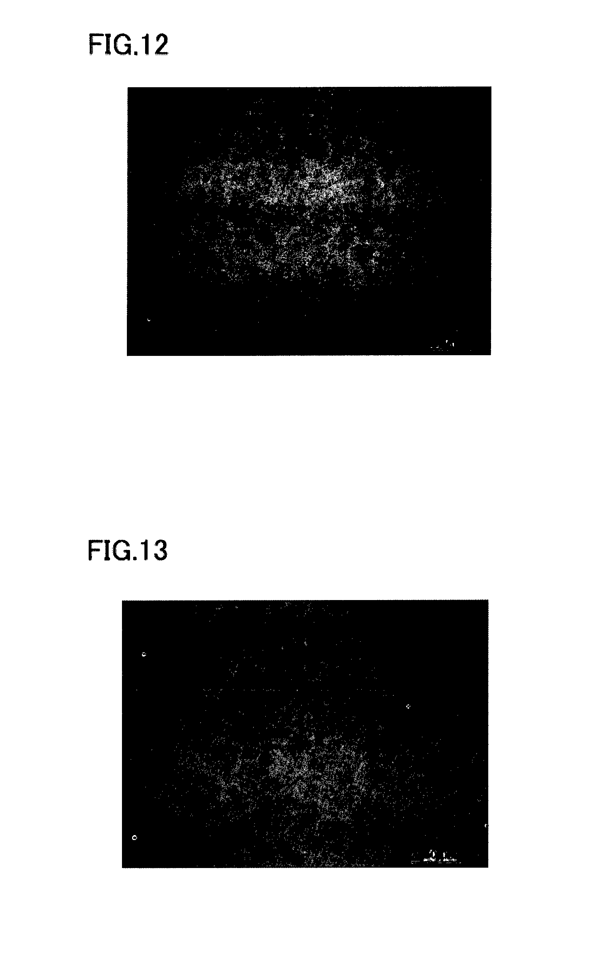

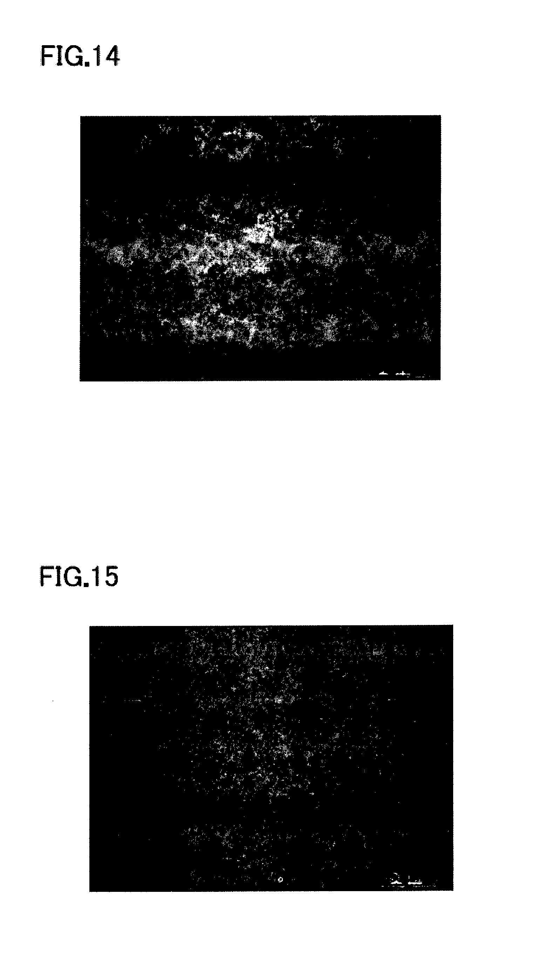

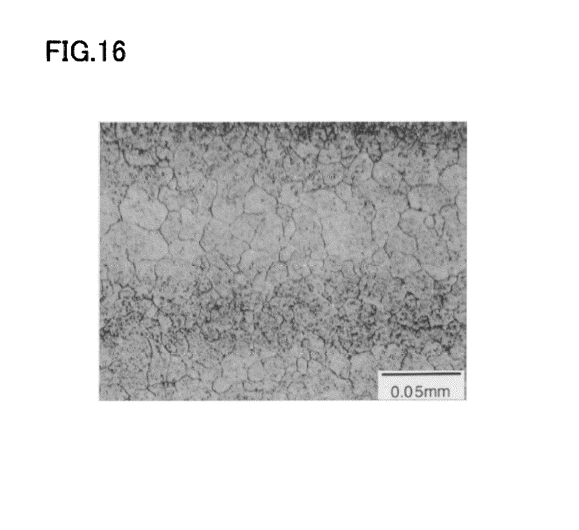

Fig. 11 shows the results obtained by examining the relation between the area ratio of a precipitate in an inner un-nitrided region and the tempering temperature. In Fig. 11, the horizontal axis shows a tempering temperature (°C) while the vertical axis shows the area ratio (%) of a precipitate. Also, the holding time period during the tempering treatment was fixed to be 2 hours. Furthermore, Figs. 12 to 15 show photographs of cross sections of steel materials in the case where the tempering temperatures are set at 180 °C, 210 °C, 240 °C, and 260 °C, respectively, in which case a precipitate in each steel material is shown in black color. Fig. 11 shows the relation between the tempering temperature and the area ratio of a precipitate, which is obtained by calculation, shown darker than those in the photographs of Figs. 12 to 15. Furthermore, Fig. 16 is a photograph of prior austenite crystal grains in the inner un-nitrided region in the case where the heating temperature during the quenching treatment is set at 850 °C.

It turned out from Fig. 11 that the area ratio is 11% or higher at a tempering temperature of 240 °C, and the area ratio is increased to 12% or higher at a tempering temperature of 260 °C. In addition, the reason why the area ratio of the precipitate is determined by the inner un-nitrided region is that the nitrided surface layer portion varies in solid solubility limit concentration of carbon, so that the area ratio of the precipitate significantly varies. Furthermore, the area ratio varies also at the carbonitriding treatment temperature or the quench heating temperature, which can be estimated by the average particle diameter of the prior austenite crystal grains. As shown in Fig. 16, the grain size number of the prior austenite crystal grain in the un-nitrided region at a heating temperature of 850 °C was No. 9.5. Based on the review of (1) to (5) described above, it turned out that a steel material made of SUJ2 of the JIS standard is subjected to a carbonitriding treatment and a quenching treatment to set the nitrogen concentration in the surface (the raceway surface or the rolling surface) at 0.4 mass % or higher, and the tempering treatment is performed at a temperature of 240 °C or higher, with the result that an inexpensive bearing component that is improved in yield strength and increased in lifetime can be achieved.

It should be understood that the embodiments and examples disclosed herein are illustrative and non-restrictive in every respect. The scope of the present invention is defined by the terms of the claims, rather than the description above, and is intended to include any modifications within the meaning and scope equivalent to the terms of the claims.

INDUSTRIAL APPLICABILITY

The bearing component and the rolling bearing of the present invention are particularly advantageously applicable to a bearing component having a surface layer portion that is nitrided and includes a raceway surface or a rolling surface, and a rolling bearing including the bearing component.

REFERENCE SIGNS LIST

1 deep groove ball bearing, 11 outer ring, 11A outer ring raceway surface, 12 inner ring, 12A inner ring raceway surface, 11B, 12B, 13B surface layer portion, 11C, 12C, 13C inner portion, 11D, 12D, 13D nitrogen-enriched layer, 13 ball, 13A rolling surface, 14 holder.

**Claims**

1.  A bearing component made of bearing steel and having a surface layer portion, said surface layer portion being nitrided and including a raceway surface or a rolling surface,
    a nitrogen concentration in said surface layer portion being 0.4 mass % or higher, and
    an area ratio of a precipitate in an inner portion that is not nitrided being 11% or higher.

2.  The bearing component according to claim 1, wherein the area ratio of said precipitate is 12% or higher.

3.  The bearing component according to claim 1 or 2, wherein a remaining austenite amount in said surface layer portion is 8 vol. % or lower.

4.  The bearing component according to claim 3, wherein said remaining austenite amount is 5 vol. % or lower.

5.  The bearing component according to any one of claims 1 to 4, wherein said bearing component is made of SUJ2 of the JIS standard.

6.  A bearing component made of bearing steel and having a surface layer portion, said surface layer portion being nitrided and including a raceway surface or a rolling surface,
    a nitrogen concentration in said surface layer portion being 0.4 mass % or higher, and
    a remaining austenite amount in said surface layer portion being 8 vol. % or lower.

7.  The bearing component according to claim 6, wherein said remaining austenite amount is 5 vol. % or lower.

8.  The bearing component according to claim 6 or 7, wherein said bearing component is made of SUJ2 of the JIS standard.

9.  The bearing component according to any one of claims 1 to 8, wherein a grain size number of a prior austenite crystal grain in an inner portion that is not nitrided is No. 9 or higher and No. 11 or lower.

10. The bearing component according to any one of claims 1 to 9, wherein said surface layer portion is nitrided by a carbonitriding treatment, and
    said carbonitriding treatment is performed such that, assuming that a carbon activity in said bearing component is defined as $a_C$ and an undecomposed ammonia concentration within a heat treatment furnace having said bearing component arranged therein during said carbonitriding treatment is defined as $C_N$, a value of $\gamma$ defined by $\gamma = a_C/C_N$ falls within a range of 2 or more and 5 or less.

11. A rolling bearing comprising:

    an outer ring having an inner circumferential surface provided with a raceway surface;
    an inner ring having an outer circumferential surface provided with a raceway surface, said inner ring being disposed on an inner side of said outer ring; and
    a plurality of rolling elements each having a rolling surface coming in contact with said raceway surface, said plurality of rolling elements being aligned on an annular raceway,
    at least one of said outer ring, said inner ring and said rolling elements being a bearing component according to any one of claims 1 to 10.

FIG.1

FIG.2

# FIG.3

```
┌─────────────────────────┐
│    STEEL MATERIAL       │─── S10
│   PREPARING STEP        │
└─────────────────────────┘
            │
            ▼
┌─────────────────────────┐
│  QUENCH HARDENING STEP  │─── S20
└─────────────────────────┘
            │
            ▼
┌─────────────────────────┐
│     TEMPERING STEP      │─── S30
└─────────────────────────┘
            │
            ▼
┌─────────────────────────┐
│     FINISHING STEP      │─── S40
└─────────────────────────┘
            │
            ▼
┌─────────────────────────┐
│    ASSEMBLING STEP      │─── S50
└─────────────────────────┘
```

FIG.4

# FIG.5

850°C

A₁

OIL COOLING

QUENCH HARDENING STEP

FIG.6

FIG.7

EP 2 966 311 A1

FIG.8

REVOLUTION SPEED(min$^{-1}$)

2500

0

0.1  0.3  0.1  0.1

TIME(sec)

FIG.9

FIG.10

REMAINING
AUSTENITE AMOUNT(vol.%)

TEMPERING TEMPERATURE(°C)

EP 2 966 311 A1

FIG.11

EP 2 966 311 A1

FIG.12

FIG.13

FIG.14

FIG.15

FIG.16

**INTERNATIONAL SEARCH REPORT**

| International application No. |
| --- |
| PCT/JP2014/050962 |

A. CLASSIFICATION OF SUBJECT MATTER

*F16C33/64*(2006.01)i, *C21D1/06*(2006.01)i, *C21D9/36*(2006.01)i, *C21D9/40* (2006.01)i, *C23C8/32*(2006.01)i, *F16C19/06*(2006.01)i, *F16C33/32*(2006.01)i, *F16C33/62*(2006.01)i

According to International Patent Classification (IPC) or to both national classification and IPC

B. FIELDS SEARCHED

Minimum documentation searched (classification system followed by classification symbols)

F16C33/64, C21D1/06, C21D9/36, C21D9/40, C23C8/32, F16C19/06, F16C33/32, F16C33/62

Documentation searched other than minimum documentation to the extent that such documents are included in the fields searched

| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y<br>A | JP 2009-299759 A (NSK Ltd.),<br>24 December 2009 (24.12.2009),<br>paragraphs [0031] to [0033]<br>(Family: none) | 6-7,11<br>10<br>1-5,8-9 |
| X<br>Y<br>A | JP 2008-174822 A (NTN Corp.),<br>31 July 2008 (31.07.2008),<br>paragraphs [0039] to [0058]<br>(Family: none) | 6-7,11<br>10<br>1-5,8-9 |
| X<br>Y<br>A | JP 2009-236145 A (NTN Corp.),<br>15 October 2009 (15.10.2009),<br>paragraphs [0009] to [0023], [0074] to [0100]<br>(Family: none) | 6-8,11<br>10<br>1-5,9 |

| [×] Further documents are listed in the continuation of Box C. | [ ] See patent family annex. |
| --- | --- |

| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| --- | --- |

| Date of the actual completion of the international search<br>15 April, 2014 (15.04.14) | Date of mailing of the international search report<br>28 April, 2014 (28.04.14) |
| --- | --- |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2014/050962

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2007-154293 A  (NTN Corp.),<br>21 June 2007 (21.06.2007),<br>paragraphs [0007] to [0011]<br>& US 2009/0165896 A1    & EP 1964940 A1<br>& EP 2360287 A1          & WO 2007/066441 A1<br>& CN 101326302 A        & CN 101880852 A | 10 |
| A | JP 2011-140993 A  (JTEKT Corp.),<br>21 July 2011 (21.07.2011),<br>paragraphs [0035] to [0049]<br>(Family: none) | 1-11 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007154293 A